# EUROPEAN PATENT APPLICATION

(11) **EP 1 761 086 A1**
(43) Date of publication of application: **07.03.2007**
(21) Application number: 05107985.3
(22) Date of filing: 31.08.2005
(51) Int. Cl.: H04Q 7/32, H04L 12/28, H04B 1/16, G08B 25/10

(54) **Method and apparatus for switching network modes**

(71) Applicant: NTT DoCoMo, Inc., Tokyo (JP)
(72) Inventor: Hurler, Bernhard, 76185 Karlsruhe (DE); Prehofer, Christian, 81477 Muenchen (DE); Wei, Qing, 81735 Muenchen (DE); Zitterbart, Martina, 76344 Eggenstein (DE); Claussen, Joerg, 81375 Muenchen (DE)
(74) Representative: Betten & Resch

(57) **Abstract**

A method for operating a wireless network comprising a plurality of nodes, the network being operable in a plurality of network modes and being able to switch between different network modes, each network mode representing an operation scheme of the network in which a plurality of network parameters are chosen such that the network as a whole fulfils a desired operation characteristics corresponding to said network mode, wherein said network is capable of switching from the present network mode to a target network mode which fulfils a different desired operation characteristics by using one of a plurality of switching methods, each switching method having different switching characteristics, whereas said method comprises:
selecting the switching method for switching to said target mode such that the switching characteristics of the switching method is in accordance with the desired operation characteristics of the target network mode, and
switching from the present network mode to said target network mode using said selected switching method.

## Description

### FIELD OF THE INVENTION

The present invention relates to a method and an apparatus for switching network modes, in particular wireless network modes.

### BACKGROUND OF THE INVENTION

Networks in general are responsible to enable data communication between arbitrary nodes. The requested characteristic of this communication is determined by the specific circumstances in which the communication takes place: applications may request reliable data transfer, low latency, or energy-efficient communication between network nodes.

In wireless sensor networks (hereinafter also referred to as WSN) data communication patterns differ from traditional networks, and WSN applications differ from conventional applications. First, WSN applications and their communication needs are often known prior to their time of execution. Second, communication in WSNs is usually characterized by so-called data-centric communication. This means amongst others that sensor data is aggregated (e.g. from multiple sources), transformed, or otherwise processed, and then forwarded using multi-hop paths.

However, there is a wide variety how the network traffic in a wireless network is organized, and the possibility of data aggregation and then forwarding the aggregated data is only one possibility. Under certain circumstances it may also be preferable not to use data aggregation but rather to use direct communication between the individual nodes, or also possibly to change other characteristic parameters of the network communication which may be summarized under the term "quality of service (QoS)".

Traditional network protocols, which provide selectable communication characteristics, use QoS (quality of service) parameters mapping them to single point-to-point links. Thus, applications may choose appropriate QoS parameters for each connection. However, typical applications in WSNs (wireless sensor networks) comprise many single nodes and, thus, many possible and actual connections among them. Setting up the desired characteristic for every connection request would be time consuming and would burden the network with a lot of overhead.

in view of the foregoing it is an object of the invention to enable an efficient selection of the communication characteristics in a wireless network.

### SUMMARY OF THE INVENTION

According to one embodiment there is provided a method for operating a wireless network comprising a plurality of nodes, the network being operable in a plurality of network modes and being able to switch between different network modes, each network mode representing an operation scheme of the network in which a plurality of network parameters are chosen such that the network as a whole fulfils a desired operation characteristics corresponding to said network mode, wherein said network is capable of switching from the present network mode to a target network mode fulfilling a different desired operation characteristics by using one of a plurality of switching methods, each switching method having different switching characteristics, whereas said method comprises:
selecting the switching method for switching to said target mode such that the switching characteristics of the switching method is in accordance with the desired operation characteristics of the target network mode, and
switching from the present network mode to said target network mode using said selected switching method.

This allows a particularly efficient way of adjusting the network parameters through network modes and an adaptive switching between them. Instead of considering every single connection between individual nodes it is advantageous to set up a whole network (or parts of it) into a desired mode which may be called a network mode. A certain network mode may be regarded as a certain pattern, scheme or as having a certain characteristics according to which the communication of the network operates if the network is in a certain "network mode". A network mode may e.g. a "energy efficient" mode, or it may be a "reliable" mode, or it may by a fast or "low latency" mode. According to the mode which represents a certain desired overall characteristics or overall property of the network communication the individual network parameters like the network topology, the routing protocol, etceteras, are chosen in a certain mode such that the overall characteristics of the network operation fits into the desired mode.

There are provided several predefined "network modes", and an application (or another external trigger) is then able to request a certain network mode with a certain characteristics instead of individually establishing connections with desired QoS parameters for the individual connections in the network. Hence, the whole network, or certain sets of network nodes belonging to one application, or parts of a network responsible for a certain task can be set into a network mode in one step avoiding the need to set up every single route on its own. The network mode itself may be composed of several high-level network parameters or characteristics like "fast data transfer" or "use of redundant routes". The network may map this mode and its corresponding high-level network parameters to link and node parameters, which then provides the requested communication behavior. Using the different network parameters there can be defined certain network modes. These modes give applications the possibility to achieve an optimized network behavior (according to their needs) by calling a certain network mode which fits most under given circumstances.

The provision of a plurality of switching methods makes it possible to select a switching method for switching to the target network mode which matches with respect to its characteristics the target network mode or is in accordance with the target mode. In other words already the method of switching in some sense "anticipates" the target network mode or at least is chosen such that its characteristics in a best possible manner (among the switching methods offered) matches with the characteristics of the target network mode. The selection can thereby be done such that the negative effects of the switching which might contradict the "goal" or "characteristics" of the target mode are minimized given the available switching methods.

According to one embodiment one of said plurality of network modes is an energy saving mode and said selected switching method is a method which performs switching in an energy efficient manner to the other available switching methods.
Thereby the switching method already anticipates and to some extent also already fulfils the goal of the target mode, namely to save energy.

According to a further embodiment one of the plurality of network modes is a fast mode and said selected switching method is selected such that the switching is performed in a fast manner compared to the other available switching methods. This allows the rapid response time which is the goal of the fast mode to be fulfilled at least partly already during the switching, or at least the switching is not performed in such a manner that it would contravene the goal of the target mode.

According to a further embodiment one of the plurality of network modes is a reliable mode, and said selected switching method is a method which performs switching in a reliable manner to the other available switching methods. This makes it possible already during the switching to provide to some extent the goal of reliability which the target mode intends to achieve.

According to a further embodiment the plurality of switching methods comprises:
a plurality of selectable switching propagation methods for propagating a switching signal through the nodes of said network. Different switching propagation methods may also have different characteristics which match to a different extent with the characteristics of the target network mode. Suitably selecting the switching propagation method allows to take into account the requirements of the target mode already during the switching.

According to a further embodiment the plurality of switching methods comprises:
plurality of selectable switching triggering methods for triggering the switching of a network mode from a present mode to a target mode. Different switching triggering methods also may match to a different extent with the target network mode, and
therefore the suitable selection of a triggering switching method may also contribute to the goal of being in accordance with the characteristics and the requirements of the target mode already during the switching process.

According to a further embodiment the plurality of switching methods comprises:
a plurality of selectable node role switching methods for switching the role of a node in the network from its present role to the role which is in accordance with the target network mode. The provision of different role switching methods makes it possible to perform the adoption of the new role of a node in a manner which is most suitable under given circumstances.

According to a further embodiment the selection of a switching method is further based on context information representing the status of the network or its nodes or the environment in addition to the characteristics of the target network mode.
Using context information in addition to the mere characteristics of the target mode makes it possible to adapt the switching to the given circumstances in an even more refined manner.

According to a further embodiment the selection of a network mode switching method comprises one of more of the following: selecting a switching propagation method; selecting a switching triggering method; selecting a node role switching method. The combination of the selection of a switching propagation method, a switching triggering method and a node role switching method allows a highly adaptive execution of the switching from one network mode to the other.

According to a further embodiment each network mode has assigned a set of parameters indicating for each node the role of the node in a certain network mode, and further indicating one or more of the following:
a switching propagation method;
a switching triggering method.

Assigning a set of parameters to each network mode which define the switching propagation method and the switching triggering method enables a relatively easy implementation of the different methods which may then be invoked by referring to a lookup-table where the respective parameters are stored, and which may be changed accordingly once a network mode has changed. Instead of a look-up table other means could also be used to determine the switching propagation method and the switching triggering method, e.g. a rule-based approach could be used as well.

According to one embodiment there is provided a network node for operating a wireless network comprising a plurality of nodes, the network being operable in a plurality of network modes and the node being able to switch between different network modes, each network mode representing an operation scheme of the network in which a plurality of network parameters are chosen such that the network as a whole fulfils a desired operation characteristics corresponding to said network mode, wherein said network node is capable of switching from the present network mode to a target network mode which fulfils a different desired operation characteristics by using one of a plurality of switching methods, each switching method having different switching characteristics, whereas said node comprises:
a selecting module for selecting the switching method for switching to said target mode such that the switching characteristics of the switching method is in accordance with the desired operation characteristics of the target network mode, and a switching module for switching from the present network mode to said target network mode using said selected switching method.

A network node as mentioned may be used to implement an adaptive switching method according to embodiments of the invention.

According to one embodiment there is provided a network node, wherein one of said plurality of network modes is an energy saving mode and said selected switching method is a method which performs switching in an energy efficient manner to the other available switching methods, and/or
wherein one of said plurality of network modes is a fast mode and said selected switching method is selected such that the switching is performed in a fast manner compared to the other available switching methods, and/or
wherein one of said plurality of network modes is a reliable mode, and said selected switching method is a method which performs switching in a reliable manner to the other available switching methods.

This allows an adaptation of the switching process to the target network mode in case of a network having as network modes an energy saving mode, a fast mode and a reliable mode.

According to one embodiment the target network mode is an energy saving mode and the selected switching method is a method which performs switching to said mode in an energy efficient manner using the following mechanisms:
nodes execute said switching based on a time out;
tearing down the operation of the old mode before starting the new mode;
using an efficient routing protocol such as multicast.
The use of a time-out mechanism as a trigger for the switching to the energy efficient mode makes it possible to perform the switching without the need of notifying the individual node that it should switch because it may determine internally based on the time-out whether the switching criterion is fulfilled. Moreover, not only does the node not need to receive a message, it further does not need to send a switching propagation message. This saves energy and thereby is in accordance with the target mode requirements. Tearing down or terminating the operation of the old mode before starting the new mode and the use of efficient routing mechanisms such as multicast similarly may contribute to the fact that the switching is performed in an efficient manner.

According to one embodiment the target network mode is a fast mode and said selected switching method is a method which performs switching to said mode in a fast manner using one of the following mechanisms:
a switching message received by said node is forwarded without delay;
a switching messages is forwarded using a fast route or a fast routing mechanism;
the propagation of the switching message is carried out independent of the actual
switching.

Forwarding the switching message without delay makes it possible to propagate the switching message throughout the network fast, thereby enhancing the overall speed of the switching. Preferably the propagation is performed independent of the actual switching to avoid any delay which could be introduced by waiting for the actual switching.

According to one embodiment the target network mode is a reliable mode and said selected switching method is a method which performs switching to said mode in a reliable manner by using one or more or the following mechanisms:
a switching message propagated by said node is forwarded using on multiple and/or redundant routes;
the switching message is forwarded in a repeated manner;
operating the old mode at least until the new mode starts to operate.
This ensures that the propagation of the switching message is performed in a manner which matches with the characteristics of the target mode. Redundant or multiple routes as well as repeated transmission of the switching message improve the reliability of the switching process. Similarly, the operation of the old mode at least until the new mode starts to operate contributes to the reliability of the switching process.

According to one embodiment a switching propagation method for propagating the switching through said network is carried out independent of the actual switching of a node. This makes it possible to apply criteria to the switching propagation which are independent of the criteria used for the actual switching, moreover, it can also enable a fast propagation of the switching message independent of the status of the actual switching which may accelerate the overall switching of the whole network.

According to one embodiment the wireless network is a wireless sensor network.

### BRIEF DESCRIPTION OF THE DRAWINGS

Fig. 1 illustrates a network environment in which an embodiment according to the invention may be implemented.
Fig. 2 shows a flowchart illustrating an embodiment according to the invention.
Fig. 3 shows a flowchart according to a further embodiment of the invention.
Fig. 4 schematically illustrates different switching methods according to an embodiment of the invention.
Fig. 5 schematically illustrates the switching between network modes according to an embodiment of the invention.
Fig. 6 schematically illustrates the configuration of a network node according to an embodiment of the invention.

### DETAILED DESCRIPTION

In the following the present invention will be described by exemplary embodiments.

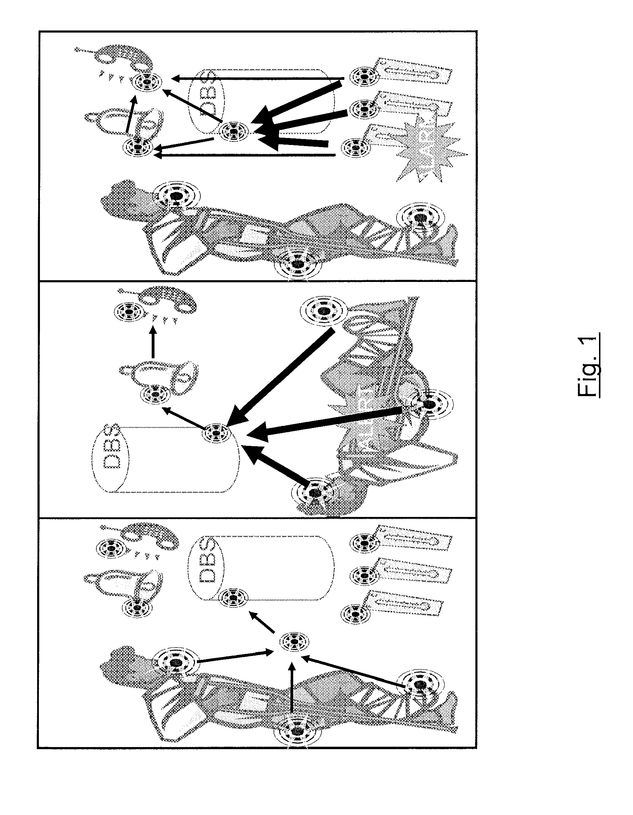

In a first embodiment of the present invention the network modes are employed in connection with a wireless sensor network (WSN). A typical application which uses these network modes is a health care application as illustrated in Figure 1. The network comprises a plurality of sensors which are partly located at the body of a patient and partly distributed around in the room and possibly also other rooms (not shown).

Fig. 1 in its three individual illustrations shows three exemplary network modes in case of such a scenario. The mode shown on the left-hand side is the "normal mode" used in a normal state for monitoring the body functions. Its overall characteristics is that it is an energy efficient mode. The mode shown in the center is the "health alert" mode in which for some reason, possibly due to the sudden worsening of the patient's condition, a more intense monitoring of the body functions is necessary with less delay compared to the normal mode. Accordingly, its overall characteristics is that it is fast and has a low latency. The right hand side of Fig. 1 shows the "fire alert mode" in which due to a fire somewhere in the area it is desired to have the information distributed fast and reliable, its overall characteristics may therefore be described as "reliable".

To summarize, the energy efficient mode can be mapped to a body monitoring situation where the health measurement data of the patient is collected regularly, the direct mode can be mapped to a health alert situation where low delay of data transfer is required and the redundant mode can be mapped to the fire alert situation, where the individual sensor node can fail with high possibilities.

In the following the three different modes are explained in somewhat more detail by explaining individual network parameters which result in the desired overall characteristics or behavior.

Normal mode - Energy efficient
The normal mode intends to ensure a long-lived network. This is achieved by applying appropriate schemes for saving energy. E.g. single nodes may choose appropriate sleeping cycles and the network uses energy-efficient routing schemes. Regarding the network parameters the normal mode is characterized as follows:
- allow energy-saving mode (e.g. sleeping) of nodes tolerating reduced responsiveness and speed,
- allow data aggregation,
- allow optimizing network topology.

Direct mode - Alert Mode
The direct mode relaxes energy constraints, the energy conservation is not the focus of the direct mode. While within normal mode the WSN is supposed to save as much energy as possible, in the direct mode the main purpose is to provide communication with low latency. The direct mode is characterized as follows:
- prevent use of power-saving and sleep mode of nodes,
- no data aggregation,
- direct connection with least intermediate (most remote but still reachable) node
- data forwarding with minimum delay.

Redundant mode - Alarm Mode
In redundant mode energy constraints are relaxed even more. In addition to the no *aggregation* parameter redundant data forwarding is introduced. Thus, data transfer is highly reliable and fast. The following network parameters are set in the redundant mode:
- prevent the use of power-saving and sleep mode of nodes,
- no data aggregation,
- allow redundant data transmission,
- use redundant routing paths.

The network parameters identify the way in which a network node operates. Each network mode has assigned a certain set of network parameters which define for n individual node how it has to operate when being in a certain network mode.

By introducing network modes it is possible to force parts or regions of a network to a common characteristic of communication and data processing. Since different network modes provide different network characteristics, network modes must be changed if a situation (the "context" in which the network operates) or an application requests different network behavior. This means that the network parameters for a certain node have to be changed. However, the action of switching network modes influences the network behavior itself because the mode change must be conveyed to the individual nodes. Additional messages may be necessary to initiate the switch to another mode and the network must distribute this switching invocation. In addition to that, sensor nodes may be busy deciding switching criteria etc. Some type of switching may even interrupt the networks services by reorganizing individual communication links or even the whole network topology.

According to an embodiment of the invention the network is provided with a plurality of switching methods. Each switching method has an "overall characteristics", and if the network is to switch from the present network mode to a new "target" network mode there is selected a switching method the switching characteristics of which matches best with the characteristics of the target network node.

According to an embodiment there may be assumed that the network mode should switch from a present network mode, the characteristics of the present node being such that it is not energy saving, to a network mode that is an energy saving mode. In such a case there is selected a switching method among the plurality of possible switching methods which has an energy saving characteristics. This avoids that the switching process itself would contradict the intention of the switching, namely to save energy.

According to a further embodiment there may be assumed that the switching should performed to a target network mode which has a particularly low latency (or a fast response time). In such a case it would contravene the goal of the switching if the switching method itself would cause any service disruption or is not fast in some other aspects. In such a case, if there are provided different switching methods, one in which switching can be accomplished in a more rapid and another one in which switching is performed in a more relaxed slow way which may also lead to service interruptions, for switching to a target network mode which has a characteristics of low latency there is then selected a switching method the characteristics of which is in accordance with or matches this goal, namely a switching method which performs the switching in a more rapid way.

To summarize, among the plurality of switching methods the network is capable to perform there is selected the characteristics of which matches best with the characteristics of the target network mode. Depending on the characteristics of the target network mode (which may be described by a single characteristic property or by a single term describing an overall characteristics, such as e.g. "energy saving", or "low latency", or "high reliability") there is selected a corresponding switching method for switching to such a target network mode, and it is selected such that possible negative side effects of switching which could be in contradiction with the characteristics of the target mode are minimized. E. g. for the examples given before, namely the network mode characteristics "energy saving", "low latency", and "high reliability" there may be provided three corresponding switching methods, a first one which is energy saving, a second one which is fast, and a third one which is highly reliable. Depending on the target network mode to which the network should switch there is then chosen the appropriate switching method the characteristics of which matches the characteristics of the target network mode.

For implementing the embodiment the network modes (corresponding to respective sets of network parameters) and the switching methods may be predefined, e.g. by storing a respective set of network parameters corresponding to each respective mode in each network node, and further storing a set of switching parameters defining a certain switching method for each of the available switching methods in each node. Each target network mode may then be assigned a corresponding switching method which is invoked if a switching to the target network mode is requested.

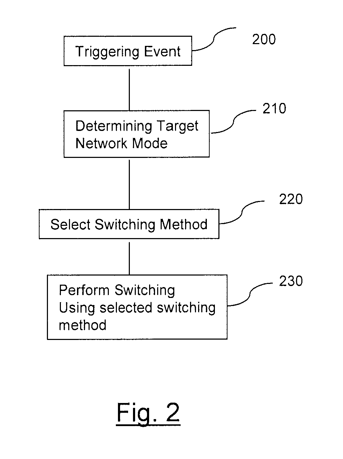

Fig. 2 schematically illustrates the mode switching according to an embodiment of the invention. In operation 200 there occurs a triggering event which is responsible for initiating the network mode switching. This event may be a request by an application that the network switches its mode, or it may be an "external" event such as a parameter measured by a sensor of the WSN exceeding a threshold value thereby indicating the need to switch the network mode. In operation 210 then the target network mode is determined, e.g. if the triggering event is a parameter measurement the target network mode may be determined by checking a lookup-table or by applying a more sophisticated algorithm which maps a certain parameter measurement to a corresponding target network mode. If the triggering event in operation 200 is a request by an application the target network mode may already be explicitly requested by the application, in such a case operation 210 may be omitted.

Once the target network mode has been determined, in operation 230 there is selected a corresponding switching method the characteristics of which is most appropriate for the target network mode. Again this may be carried out by referring to a lookup-table or by any more sophisticated decision algorithm. Then, in operation 230 the selected switching method is executed to switch from the present network mode to the target network mode.

In the following there will be explained in somewhat more detail a procedure for the switching of network modes according to an embodiment of the invention. The procedure is executed on all nodes in a network and switches, starting from one initial node, all nodes to a new mode. It enables each individual node to decide how to reach the new mode, based on the current mode, the target mode and possibly context available The available context information may include such information as available battery power, processing power, or connectivity (whether it is able to connect to certain other nodes in the network or not).

The switching process for switching from one network mode to another network mode may involve several aspects. A network mode actually corresponds to the fact that each node in the network acts in accordance with the present network mode, in other words, the node has a status which reflects the present network mode. If the network mode should change, each individual node has to be informed about the change to be performed, e.g. by a trigger message, and then the node has to assume its new function (to change its status) in accordance with the new network mode. Moreover, typically the switching of the network mode requires not only that the node assumes its new function but also that the network mode which has received the triggering message itself distributes the information that a mode switching should be performed to other network modes. This distribution of the triggering message (or switching message) may even be performed independent of whether the node has already changed its function to the new network mode.

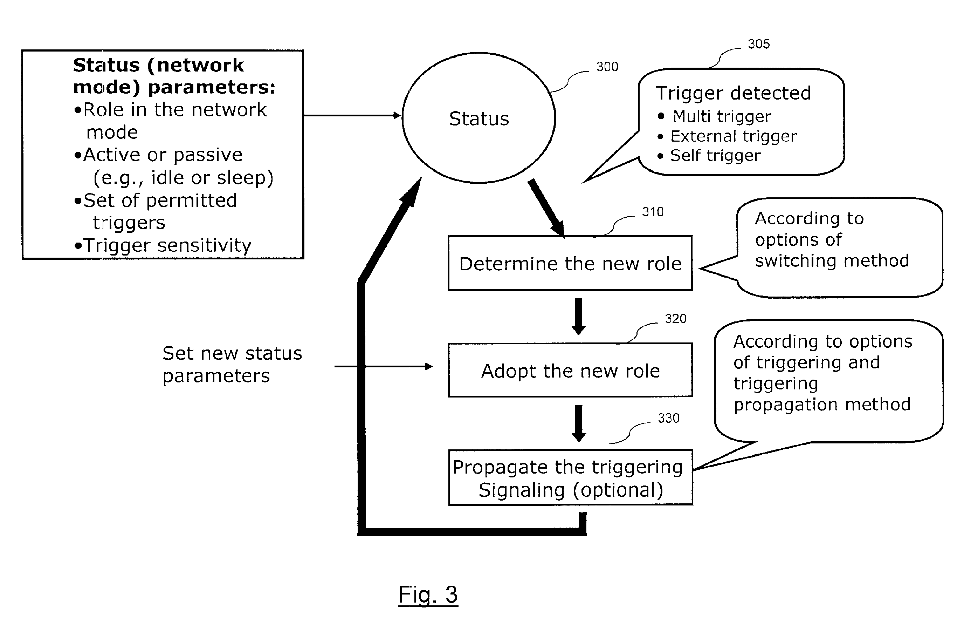

This is now in somewhat more detail explained in connection with Fig. 3. According to the present network mode a certain node has a corresponding status as indicated in element 300 in Fig. 3. This status corresponds to the actual network mode, and it further corresponds to a certain setting of internal parameters (previously referred to as network parameters) inside the node which reflect this status. One such network parameter may be the role of the node in the network, e.g. the node may be a source (only sending signals but not receiving them), a sink (only receiving signals but not sending them); or it may be an aggregating node which receives signals from several nodes and forwards them to one or more other nodes. A network parameter may further indicate whether the node is idle (in a sleep mode) or active In addition to such network parameters which indicate the way of operating in the network during normal communication in a certain mode there may be other parameters which may be referred to as switching parameters and which indicate how the node operates with respect to the switching. A switching parameter may indicate which kind of triggers are permitted to initiate a mode switching (e. g. external trigger or internal trigger). A further switching parameter may indicate the sensitivity to a triggering signal, e.g. if multiple triggering signals are required for triggering a mode switch or if only a single triggering event is sufficient. Furthermore, there may be switching parameters which indicate how a switching signal is to be propagated through the network.

Before turning to Fig. 3 now at first some switching parameters which relate to the characteristics of the switching method are explained in somewhat more detail.

The switching parameters being used may include the following:
- switching sensitivity: This parameter indicates how to react on a trigger event triggering a mode switch. The switching in reaction on the triggering event may be performed immediately in response to the first trigger event or may wait for the coincidence or accumulation of several trigger events
- setting up new mode - the new network mode can be set up proactively while the old is still in operation, alternatively, the old network mode of operation is terminated and the new one is setup.
- node role change procedure - This may define how to change transport routes, communication characteristics (e.g. bandwidth), and aggregation mechanisms in the network. A change in a mode may involve a new route to be set up via which the node should communicate, it may further need to change the function of the node (such as from source to aggregating node, or from normal node to a redundant node which sends via a redundant path).
   These changes in the role of a node could be set up a in such a way that no or only minimal changes in the network are needed, thus, avoiding communication breakdown or disruptions. Such a change may be referred to as "soft node role switching". On the other hand the new role may be established from scratch, which may lead to more optimal solutions in some cases. This may be referred to as "hard node role switching"
- whether explicit or implicit triggering is used:
   o explicit trigger messages: how to forward and re-send the messages for switching to other modes
- implicit message-less trigger: how to set timers for falling back to other modes

Now with reference to Fig. 3 there will be described a switching procedure according to an embodiment of the invention. The following procedure for mode switching is executed by every node in the network. Every node is in a certain state defined by following network parameters:
- network mode,
- role in network mode (e.g. aggregating node, source or sink),
- processing status is active (processing or communicating) or passive (sleeping or being idle),
   and additionally the following switching parameters:

- set of permitted triggers (e.g. wake-up on communication request, time-out trigger to switch back to normal mode, etc.)
- trigger sensitivity (single trigger, multiple trigger)
- communication partners

Nodes are executing their specific task (corresponding to their role in the network mode) or reside in sleep state until they receive a valid trigger condition. Waking up if necessary and processing the trigger event starts the procedure for mode switching.

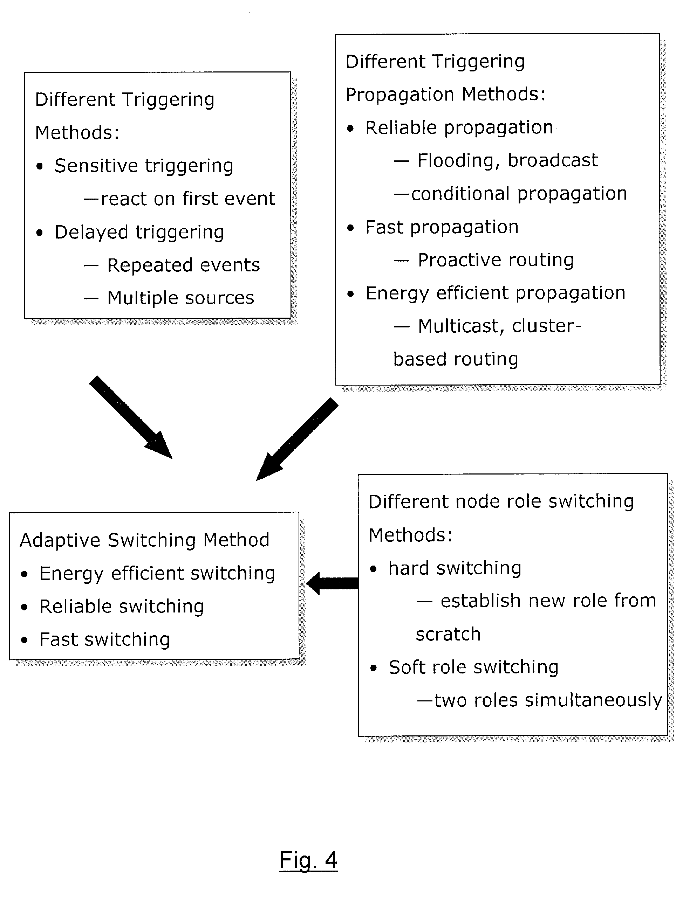

The procedure may include the following operations which are now explained referring to Fig. 3:
1. In operation 305 the node detects a trigger condition (single trigger, additional trigger, self-trigger, partner-trigger).
2. If the trigger is sufficient initiate switch (operation 310 in Fig. 3), otherwise wait for additional triggers (step 1).
3. Determine new role within the node (operation 310 in Fig. 3): the new role may be pre-calculated or predefined or it may be determined by a protocol algorithm depending on the trigger signal(s). The determination of the new role may include to at first determine the target network mode. This determination may be based on the trigger signals which could in this case e.g. be sensor values. Once the target network mode is determined the network node has to determine its role in the target network mode. In one embodiment the role of the node is predefined for each possible network mode and there is a predefined set of network parameters for each possible target mode, however, it may according to a further embodiment also be possible that the role which the network node assumes depends on additional criteria, e.g. the trigger signals, the application which is requesting the mode switch, or the like.
4. Once the new role in the target network mode has been determine the node has to adopt its new role (operation 320). This may include the setting of several status parameters which reflect the status of the node and which have to be brought into accordance with the new role of the node. The following parameters (network parameters and switching parameters) may experience a new setting during this procedure:
   a. role parameter defining role of the node within the mode (e.g. source, sink, aggregating node, forwarder, redundancy origin, etc.)
   b. processing status parameter: e.g. being active (processing or communicating) or passive (sleeping or being idle),
   c. adapt permitted triggers , i.e. defining the set of permitted triggers which are allowed to trigger another switching from the newly adopted mode to another new mode (e.g. explicit or implicit triggering, wake-up on communication request (yes or no), time-out trigger to switch back to a predefined target mode, etc.)
   d. trigger sensitivity (single trigger, multiple trigger)
   e. timers for time-out conditions (according to trigger type), e. g. in case of the triggering event
   f. communication partners
      In addition to merely setting the parameters the node then has to adopt its new role by operating in accordance with the target network mode (e.g. as an aggregator, forwarder, redundancy origin, etc.).
5. Since a switching of the network mode requires a switching of each individual node in the network the switching information must be distributed or propagated throughout the network. This is schematically illustrated in operation 330. The triggering propagation may be carried out in different ways which have different triggering propagation characteristics. E. g. for a reliable triggering propagation such signal distribution methods as flooding or broadcast may be used. This may be used when switching to a reliable or redundant network mode. For a fast triggering propagation a proactive routing may be used. Proactive routing here means that the new path does not need to be determined or established before propagating the triggering message.
   This may mean that the switching message propagation may not follow an optimum route, but it is fast and during propagation the new communication paths can be determined. This may be particularly suitable for the switching to a fast and low latency network mode. For switching to an energy efficient mode an energy efficient triggering propagation method such as multicast or cluster-based routing may be used.
6. After the switching has been completed throughout the network the procedure returns to the beginning and waits for new triggering events (operation 300). In the foregoing it has become apparent that the network mode switching involves several components, namely the triggering of the switching, the actual switching or node role change itself (the way a node adopts its new role), and the propagation of the triggering (or the switching) throughout the network. These three components together may be regarded as together forming a switching method, and each of these three components itself may be performed in a plurality of ways. This is schematically illustrated in Fig. 4, which shows that an adaptive switching method which provides a plurality of different switching methods having different switching characteristics may include different triggering methods and different triggering propagation methods which respectively have different characteristics. An adaptive switching method can be implemented by selecting the triggering method and the triggering propagation method the characteristics of which match with the characteristics of the target network mode. Additionally an adaptive switching method may be implemented by selecting an appropriate node role switching method, as further illustrated in Fig. 4.

The different triggering methods may be implemented by setting respectively different sets of triggering parameters in each node of the network. Similarly, the different triggering propagation methods may be implemented by setting respectively different sets of triggering propagation parameters in each node of the network. Each target network mode may have assigned its corresponding set of triggering parameters and triggering propagation parameters which are stored in each network node, and if a switching to a certain target network mode is to be performed because a triggering message is received the node which should perform the switch looks up its repository and retrieves the corresponding appropriate triggering parameters and triggering propagation parameters and acts accordingly.

The different node role switching methods indicated in Fig. 4 may be implemented by the selection of either a hard role switching in which the old role is abandoned and the new role is establisher from scratch, or it may include a soft role switching in which a node which is about to change its role adopts its new role simultaneously to its old role and then switches completely over to the new role and abandons the old role if the new role is fully operable.

E. g. a node when changing from one network mode to another may have to change its communication path. In such a case this could be done in a "hard way" by dropping the old communication path and thereafter building from scratch the new one. This may be energy saving, however, it may lead to service disruption and to the loss of data packets. To avoid these effects the node role switching could instead be executed in a "soft way" such as by maintaining the old communication path while setting up the new communication path This would allow to avoid the loss of packets, however, it requires additional energy and additional network resources such as bandwidth due to the additional signaling. Therefore, depending on the target mode the suitable node role change mechanism may be selected accordingly.

In addition to the influence by the target mode, however, the selection may also be influenced by context parameters which represent additional information representing the status of the node or the network, or its capabilities. The selection of the node role switching method (hard or soft switching) may further be based on such context information in addition to the target mode. E.g. the battery status could be used as an additional criterion, and if the battery status indicates low available battery power the selection process may choose the hard switching because it saves energy rather than the soft switching, while in case of ample battery power available the decision would be to choose the soft switching. Additional context information parameters which may be taken into account when making the decision for the node role switching method could e.g. involve the available processing power.

As mentioned before, the node role change may involve changes in the routing path. This may e.g. be the case when changing from the direct (fast) mode to the normal mode, e.g. because in the normal mode some nodes act as aggregating nodes while in the direct mode all node directly transmit their data without intermediate aggregating nodes. In general, the network mode switching may involve topological changes in the network (change of communication paths). This is also the case if the switching either goes to or originates from the redundant mode because in this case the switching includes the establishment or the abandonment of redundant routing paths which may be achieved by different node role switching methods.

Again, there may be a distinction between performing the node role switching in a "soft" or a "hard" manner. Soft switching means that the new communication path(s) are established while the old one(s) are still operating to avoid latency and loss of data packets. An alternative (or additional) variant of the soft node role switching may involve the caching of incoming data until the new communication path is established and the data cached up to this moment can be transmitted. While this does not completely avoid the latency involved with the mode role switching, it at least avoids the loss of data packets.

Under certain circumstances, however, a hard switching may be preferable, in which the new communication paths are built up from scratch after having abandoned the old communication path. This may be preferable in terms of energy consumption because it avoids the need of maintaining or two communication paths simultaneously. Moreover, e.g. if the target mode is the redundant mode, there may be additional requirements (context requirements). E.g. the change to the redundant mode may involve the partition of the network into different clusters, and the (additional) requirement for the switching of the node role may be such that the new redundant communication paths go through different clusters or even through different cluster headers. In such a case it may be preferable to built the new communication paths from scratch because in this way it can be more easily ensured that the two communication paths go through different clusters or through different cluster headers of the network.

In the foregoing example of the clustering of the network in the redundant mode there may be also be performed a mixture of hard switching and soft switching. E.g. as far as the establishment of new communication paths are concerned there is executed a "hard switching", in other words the communication paths to be used after the node role switching are completely built up from scratch independently of the existing communication path. However, the abandonment of the old communication path may be performed in a "soft" way such that the old communication path is only abandoned after having established the new communication paths.

In other words, if the node role change involves a change in the communication paths, this may involve an establishment of new communication paths and/or an abandonment of old communication paths. Both aspects, the establishment of the new communication paths and the abandonment of the old communication paths can be performed in either a "soft" or in a "hard" manner. A "soft" establishment of new communication paths means that the old communication path(s) are maintained and the new communication path(s) are established additionally. The hard establishment of new communication paths means that the new paths are established from scratch independent of and without making use of the existing communication paths. Regarding the abandonment of existing communication paths, doing this in a "hard" manner means abandoning the paths independent of whether the new paths are already established, whereas doing this in a "soft" manner means to keep the old communication paths until the new communication path(s) are established.

A further aspect of a "soft" node role switching may also employ the use of an intermediate state of a node when switching its role. This may help to avoid the disruption of communication or the loss of packets. Such an intermediate state may include the use of caching incoming data which will then be transmitted after the final state has been reached (the node role switching has been completed).

It should be noted that while in the embodiment explained in connection with Fig. 3 the triggering propagation was explained to be carried out after the individual node has adopted its new role, according to one embodiment the adoption of the new role of a node and the propagation of the triggering may be performed independent of each other. According to one embodiment it may e.g. possible that at first the triggering signal is already propagated by a node despite this node has not yet adopted its new role (by changing its network parameters).

The general advantage of the aforementioned embodiments of methods to switch between network modes is that they allow efficient switching by taking into account the characteristics of the new network mode. These characteristics determine the network behavior in overall terms like energy efficiency, data delay, reliability, and response time. Thus, according to one embodiment to carry out the switching to an energy efficient network mode with relaxed requirements for data delay leads to the selection of a time-out based switching strategy (which reduces communication efforts thereby saving energy) with the possibility to rearrange network topology (achieving optimal aggregation behavior to again save energy). If, in contrast, the new network mode demands fast data communication there is selected a switching method where the switching is message-based (this reduces switching duration). Moreover, if energy efficiency is not a criterion the selected switching method may employ long-distance hops instead of communicating only with close neighbors (fast but energy consuming). By such an appropriate selection of the switching method it becomes possible to adapt the switching procedure to the characteristics of the new network mode by already fulfilling the requirements of the new mode during the switching process.

In the following a further embodiment of the invention will be described in which the network behavior can be mapped to three network modes similar to the ones already described, a normal mode which has the characteristics of being energy efficient, a "direct mode" which has the characteristics of having a low delay or latency, and a redundant mode which has as characteristics a high reliability. These basic characteristics of the three network modes leads to corresponding requirements regarding the switching methods employed to switch between the network modes. These switching requirements are listed in the following table which lists mandatory characteristics (which should be fulfilled when switching to a certain network mode) and non-relevant characteristics which are of less importance and need not to be fulfilled during the switching.

**Table 1 Different switching requirements**

| **Destination mode** | **Mandatory characteristic** | **Non-relevant characteristic** |
|---|---|---|
| normal mode | energy efficiency | reliability (loss, delay), service interruption |
| direct mode | no interruption, low delay | energy efficiency, reliability (loss) |
| Redundant mode | no interruption, reliability | energy efficiency |

A general procedure for switching has already been explained before. According to target modes to which the switching is to be performed, the different switching methods can be employed by using different options. Thereby the switching method can be chosen such as to match the characteristics of the target network mode, e.g. switching to the energy saving mode (normal mode) should be energy efficient; switching to direct mode (fast mode) should be time critical, switching to redundant mode should be reliable. In the embodiment to be described in the following the following options are available to implement different switching methods:
■ Different switching signaling propagation methods
   o Reliable propagation (broadcast, flooding)
   o Bandwidth efficient propagation (multicast, cluster based routing)
   o Fast propagation (proactive routing, i.e. propagating triggering message
   o while switching is being performed)
■ Different switching triggering methods
   o Reliable triggering which considers possible malfunctions of sensor nodes by suitably adapting the trigger sensitivity (e.g., several nodes should detect the trigger event; trigger criteria are to be fulfilled for a longer period of time to actually trigger the switching)
   o Reliable triggering which considers the possibly unreliable wireless link (e.g., by repeatedly sending the switching signaling message several times)
   o Fast triggering by suitably adapting trigger sensitivity (e.g., whenever one node detects the triggering event, it sends out the trigger signaling message)
   o Energy efficient triggering by using a time-out as a trigger for the switching. This avoids unnecessary communications and saves energy

The switching method for switching to a target network mode is chosen such that there is selected an option the characteristics of which is in accordance with the characteristics of the target network mode.

In the following there will be described a further embodiment for implementing different switching methods for switching between different network modes.

Switching from redundant mode to other modes implies removing redundant communications paths which have been used in the redundant mode to obtain high reliability. In case of the switching to the energy efficient normal mode a new energy efficient topology preferably is set up additionally (e.g. to allow signal aggregation by aggregating nodes which saves energy). To save energy expensive links may be removed even before the new topology provides new communication paths potentially causing communication interruption in this phase in favor of energy gains.

In contrast, if destination modes require interruption free communication (direct and redundant mode) preferably new communication paths are be set up first before removing old ones. These detailed steps which are to be performed when switching between the network modes are shown in the following table.

**Table 2 - Switching paths and necessary actions**

| **Switch from ⇒ Switch to ⇓** | **Normal mode** | **Direct mode** | **Redundant mode** |
|---|---|---|---|
| **Normal mode** | | ■ Reorganize network topology | ■ Remove redundant communication paths |
| | | | ■ Reorganize network topology (if beneficial) |
| **Direct mode** | ■Ignore intermediate nodes within radio range | | ■ Remove redundant communication paths |
| | | | ■ Ignore intermediate nodes within radio range |
| **Redundant mode** | ■Keep original links | ■ Keep original links | |
| | ■Add redundant paths | ■ Add redundant paths | |

For each of the node, the triggers can be either external or internal (e.g., sensor values or "switching message" received from another node, or internal time-out). Which triggering is effective may be set by an internal parameter of the node. If this triggering parameter is set such that there is required an external trigger message or "switching message", the node which receives such a message needs to propagate it all over the network. This propagation can be done in different ways. One way is adjusting the time between receiving and sending trigger (or switching) messages. Another way is changing the precondition of sending the trigger message. E.g., if the trigger event should be very reliable (considering e.g. possible malfunction of sensors) a node can wait for a certain number of repetitions of the same trigger message before it forwards the message. On the other hand, if a fast response to a trigger event is desired (e.g. in an emergency cases), the trigger message can be further propagated by a node whenever a trigger message is received. In case of external triggering, it is possible that several sources send trigger messages simultaneously. In this case complex trigger conditions can be defined (e.g., coincidence of multiple triggers, considering varying reliability of triggers from different sources, etc.). Based on a decision algorithm which uses this information as parameters it may then be decided whether and when to switch the node and when to propagate the trigger message.

But also in other respects the trigger propagation can be done in different ways in accordance with the target network mode requirements. E.g. propagation protocols for switches to the normal (energy efficient) mode in one embodiment preferably should be simple and should generate little extra traffic in the network. The frequency of trigger message repetitions should be low in order to save energy. The time between trigger event detection and propagation can be long. This can be achieved by using a time-out based trigger method to return to the normal mode.

Propagation protocols to switch to the direct mode (the fast mode) or to the redundant mode (reliable mode) should be very reliable. In these cases trigger messages are sent often (repeatedly) and within short time intervals (increased traffic may be allowed by using broadcast, redundant messages, etc.). Since the time between trigger detection and propagation should be short, each incoming triggering message readily triggers the propagation of the trigger message by the node which received the message.

As can be seen, the possible options for triggering and triggering propagation in this embodiment are adapted to the target network mode and are chosen accordingly.

In the following there will be described a more concrete example of a switching method in accordance with an embodiment of the invention, whereas the switching between a normal (energy efficient) mode and a direct (fast) mode is described in somewhat more detail.

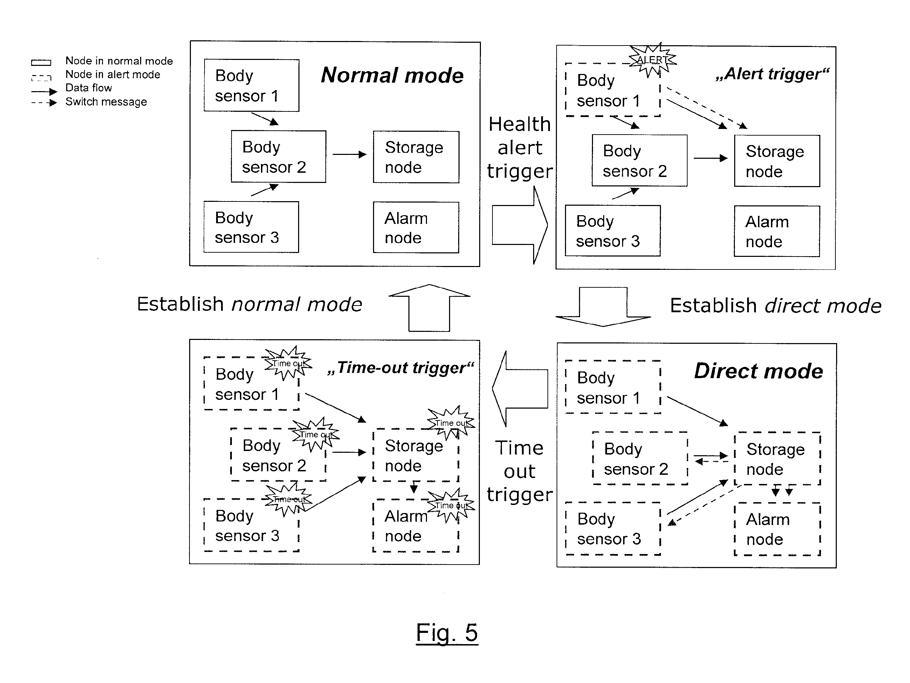

On the upper left quarter of Fig. 5 there is shown a WSN monitoring a person's health condition in normal mode. Several sensors measure bodily functions establishing an aggregation group. One of them (body sensor 2) aggregates all data and sends the aggregation to a storage node. By this aggregation topology the energy consumption is reduced by reducing the range over which the messages have to be sent. The storage node stores the monitoring result, and in case of an alarming body condition indicated by the body sensor data (or an explicit alarm message from one of the sensors) it notifies the alarm node which may e.g. comprise an alarm bell to notify the nurse or physician. The normal data flow from the body sensors 1 and 2 to body sensor 3 and from there to the storage node is illustrated by the solid line arrows.

In the upper right quarter of Fig. 5 one of the sensors (sensor 1) detects a dangerous situation (e. g. a rise of the pulse or something alike) and judges based thereupon that the situation has changed into a condition in which the network mode should switch from the normal mode to an alert mode (or "direct mode") which is more appropriate to this condition because it more frequently and more directly monitors the body condition.

The node then changes its role in the network according to the network mode to which the switching should be performed, and this means that the node now performs direct communication with the storage node. In addition to changing to direct communication it adapts its time-out parameter (setting the time-out for falling back to the normal mode), and it informs immediately its new communication partner (storage node instead of the aggregating node) of the switching to be performed by sending a corresponding switching message to propagate the switching. This is illustrated by the dashed arrow in the upper right part of Fig. 5 leading from sensor 1 to the storage node. The dashed box surrounding sensor 1 indicates that it has already switched its operation mode, while the other nodes are still in normal mode indicated by the solid boxes.

In the lower right quarter the storage node in response to the reception of the switching message is triggered to the new mode (direct mode) and informs accordingly its communication partners, the remaining body sensors 2 and 3 (except for the one that has sent the trigger because it has already switched) and the alarm node. This propagation of the switching message is schematically illustrated by the dashed arrows pointing from the storage node to its communication partners. These switching messages cause all sensor nodes to also switch their mode to the direct mode and to now directly send to the storage node (see Fig. 5 on the lower left hand side). The nodes being now being in the direct is indicated by the dashed boxes surrounding these nodes.

As long as the dangerous situation remains the responsible sensor node (body sensor 1) refreshes the mode subsequently which has the effect that the time-out is repeatedly updated by repeatedly propagating the switching message, thereby keeping the network in the direct mode as long as the sensor data indicates the need for it.

When no dangerous situation is detected by any sensor node any more the time-out is not refreshed any more and expires (lower left quarter of Fig. 5). Node by node is triggered by the time-out event which has the effect for the corresponding node that it switches back to normal mode. Not all nodes will switch back simultaneously because the different timing of the switching messages affected the setting of the time-out at different nodes at respectively different moments in time. While some nodes still try to communicate directly, other nodes already switched to normal mode. This switching back has the effect that each node assumes its new role which it is assigned in the normal node, e.g. body sensor 2 which has the function of an aggregating node tries to aggregate once it time-out has expired. This may lead to communication disruption during this time-out period in which the time-out events occur. As soon as all nodes have switched back the monitoring application starts functioning correctly in normal mode. As indicated in the upper left-hand part of Fig.5.

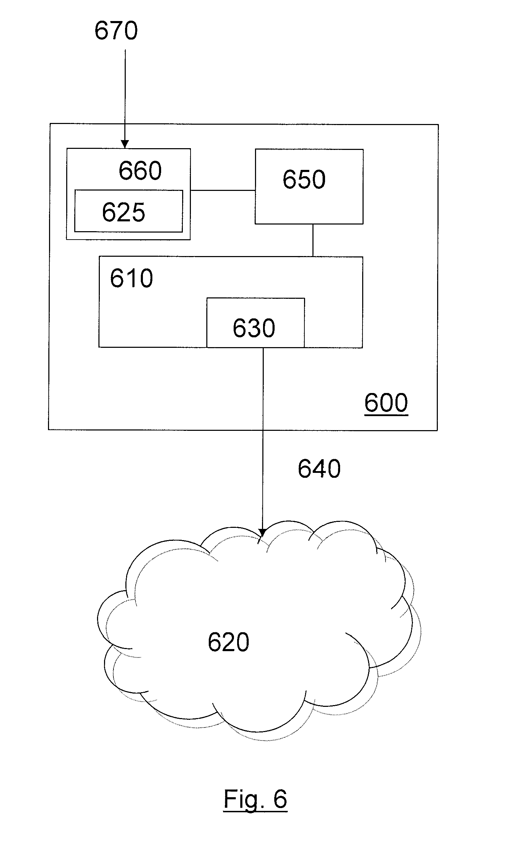

In the following a network node according to an embodiment of the invention will be described in somewhat more detail in connection with Fig. 6. The node 630 comprises an operation module 610 which performs the function of the network node by communicating with the wireless network 620 through wireless interface 630 and wireless link 640. It operates according to one of a plurality of certain network modes, and it may switch from one network mode to another under control of the switching module 650. Switching module 650 is connected to switching selection module 660 which is capable of selecting one of a plurality of switching methods according to which the switching by module 650 is to be performed. Switching selection module 660 receives from the outside some signal 670 which may trigger a switching to a new target network mode. It should be mentioned here that the signal 670 may be physically received through the wireless link 640 from another node, signal 670 and the arrow representing it in Fig. 6 therefore has to be understood as illustrating a logical connection which may be physically implemented by the wireless link 640. The triggering signal 670 as illustrated in Fig. 6 could also be an internally generated trigger signal which was generated in response to some measurement value measured by a sensor (e.g. a temperature sensor) comprised by the node. Switching selection module 660 may evaluate the signal 660 whether it actually is considered a valid triggering signal, if yes a corresponding target network mode may be determined by module 660, and then it may select a switching method for switching to the target network mode in a manner such that the selected switching method is in best accordance with the characteristics of the target mode when choosing from the available switching methods. The result of the selection may then be forwarded to the switching module 650 which then performs the actual switching according to the selected method.

The functions of the switching module 650 and the switching selection module 660 may be implemented by a programmable device such as a microprocessor or a DSP which is suitably programmed to perform the respective operation and which has a suitable interface to receive the signal 670. The operation module 610 may also comprise a microprocessor controlling its function, and according to one embodiment the microprocessor of the operation module 610 may also perform the functions of the switching selection module 660. Furthermore the operation module 610 comprises wireless interface 630 which may be implemented as a component for establishing a wireless link, such as a transmitter, receiver or transceiver, and a suitable control electronics which may comprise an already mentioned microprocessor or DSP.

In one embodiment the propagation of the switching message (the switching triggering signal) through the network may be carried out by node 600 once the switching has been carried out by the node. Then the switching message which informs also other nodes that a switching to the target mode should be carried out may be transmitted through wireless link 640.

However, according to a further embodiment the propagation of the switching message throughout the network may be carried out independently of the actual switching. For that purpose the switching selection module 620 may comprise a switching propagation module 625 as schematically illustrated in Fig. 6. switching propagation module 625 operates in order to further propagate the switching message. For that purpose it may be directly contacted to the wireless interface 630 and may cause wireless interface 630 to forward a switching propagation message through wireless link 640 once a triggering message has been received by node 660. By such a mechanism the switching propagation can be made independent of the actual switching.

The switching propagation, as already explained in connection with previously described embodiments may be carried out in different manners depending on certain criteria. For that purpose switching propagation module 625 may implement some logic to determine whether the criteria for propagating the switching message are fulfilled (e.g. the necessary number of trigger messages has been received, or the like), and if so the switching message is propagated. The determination may also include the determination according to which the switching message is propagated, e.g. whether it is to be propagated using multicast transmission, broadcast or unicast. Such a decision may also be made based on the desired characteristics of the target mode, e.g. multicast may be more energy efficient than unicast, and therefore for switching to a energy saving mode multicast could e.g. be the preferred mode of switching message propagation.

More generally speaking, according to a one embodiment the switching module is configured to switch in accordance with different switching triggering methods and further in accordance with different switching propagation methods as they have been explained in connection with previous embodiments. For that purpose the switching selection module may be configured to select the switching triggering method and the switching propagation method in accordance with the target network mode. Switching propagation and the actual switching and the switching triggering thereby may be controlled and may be executed independent of each other.

According to an embodiment of the invention the switching selection module 620, the switching module 610 and in part also the operation module may be implemented by one or more microprocessors, the microprocessor(s) being programmed to perform the switching method selection, the switching triggering method selection and the switching propagation method selection according to the methods as described in connection with the previous embodiments.

It will be understood by the skilled person that the embodiments described hereinbefore may be implemented by hardware, by software, or by a combination of software and hardware. The modules described in connections with embodiments of the invention may be as a whole or in part implemented by microprocessors or computers which are suitably programmed such as to act in accordance with the methods explained in connection with embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for operating a wireless network comprising a plurality of nodes, the network being operable in a plurality of network modes and being able to switch between different network modes, each network mode representing an operation scheme of the network in which a plurality of network parameters are chosen such that the network as a whole fulfils a desired operation characteristics corresponding to said network mode, wherein said network is capable of switching from the present network mode to a target network mode which fulfils a different desired operation characteristics by using one of a plurality of switching methods, each switching method having different switching characteristics, whereas said method comprises:
selecting the switching method for switching to said target mode such that the switching characteristics of the switching method is in accordance with the desired operation characteristics of the target network mode, and
switching from the present network mode to said target network mode using said selected switching method.

2. The method of claim 1, wherein one of said plurality of network modes is an energy saving mode and said selected switching method is a method which performs switching in an energy efficient manner compared to the other available switching methods.

3. The method of claim 1 or 2, wherein one of said plurality of network modes is a fast mode and said selected switching method is selected such that the switching is performed in a fast manner compared to the other available switching methods.

4. The method of one of claims 1 to 3, wherein one of said plurality of network modes is a reliable mode, and said selected switching method is a method which performs switching in a reliable manner compared to the other available switching methods.

5. The method of one of the preceding claims, wherein said plurality of switching methods comprises:
a plurality of selectable switching propagation methods for propagating a switching signal through the nodes of said network.

6. The method of one of the preceding claims, wherein said plurality of switching methods comprises:
a plurality of selectable switching triggering methods for triggering the switching of a network mode from a present mode to a target mode.

7. The method of one of the preceding claims, wherein said plurality of switching methods comprises:
a plurality of selectable node role switching methods for switching the role of a node in the network from its present role to the role which is in accordance with the target network mode.

8. The method of one of the preceding claims, wherein
said selection of a switching method is further based on context information representing the status of the network or its nodes or the environment in addition to the characteristics of the target network mode.

9. The method of one of the preceding claims, wherein the selection of a network mode switching method comprises one or more of the following:
selecting a switching propagation method;
selecting a switching triggering method;
selecting a node role switching method.

10. The method of one of the preceding claims, wherein each network mode has assigned a set of parameters indicating for each node the role of the node in a certain network mode, and further indicating one or more of the following components of a network switching method:
a switching propagation method;
a switching triggering method;
a node role switching method.

11. A network node for operating a wireless network comprising a plurality of nodes, the network being operable in a plurality of network modes and the node being able to switch between different network modes, each network mode representing an operation scheme of the network in which a plurality of network parameters are chosen such that the network as a whole fulfils a desired operation characteristics corresponding to said network mode, wherein said network node is capable of switching from the present network mode to a target network mode which fulfils a different desired operation characteristics by using one of a plurality of switching methods, each switching method having different switching characteristics, whereas said node comprises:
a selecting module for selecting the switching method for switching to said target mode such that the switching characteristics of the switching method is in accordance with the desired operation characteristics of the target network mode, and
a switching module for switching from the present network mode to said target network mode using said selected switching method.

12. The network node of claim 11, wherein
one of said plurality of network modes is an energy saving mode and said selected switching method is a method which performs switching in an energy efficient manner to the other available switching methods, and/or
wherein one of said plurality of network modes is a fast mode and said selected switching method is selected such that the switching is performed in a fast manner compared to the other available switching methods, and/or
wherein one of said plurality of network modes is a reliable mode, and said selected switching method is a method which performs switching in a reliable manner to the other available switching methods.

13. The network node of claim 11 or 12, further wherein said plurality of switching methods comprises:
a plurality of selectable switching propagation methods for propagating a switching signal through the nodes of said network, and/or
a plurality of selectable switching triggering methods for triggering the switching of a network mode from a present mode to a target mode; and/or
a plurality of selectable node role switching methods for switching the role of a node in the network from its present role to the role which is in accordance with the target network mode.

14. The network node of one of claims 11 to 13, wherein the selection of a network mode switching method comprises one of more of the following:
selecting a switching propagation method;
selecting a switching triggering method;
selecting a node role switching method.

15. The network node of one of claims 11 to 14, wherein
said selection of a switching method is further based on context information representing the status of the network or its nodes or the environment in addition to the characteristics of the target network mode.

16. The network node of one of claims 11 to 15, wherein each network mode has assigned a set of parameters indicating for each node the role of the node in a certain network mode, and further indicating one or more of the following:
a switching propagation method;
a switching triggering method
a node role switching method.

17. The network node of one of claims 11 to 16, wherein each network mode has assigned a set of parameters indicating for each node the role of the node in a certain network mode, and further indicating one or more of the following components of a network switching method:
a switching propagation method;
a switching triggering method;
a node role switching method.

18. The network node of one of claims 11 to 17 or the method of claim 2, wherein said target network mode is an energy saving mode and said selected switching method is a method which performs switching to said mode in an energy efficient manner using one or more of the following mechanisms:
nodes execute said switching based on a time out.;
tearing down the operation of the old mode before starting the new mode;
using an efficient routing protocol such as multicast.

19. The network node of one of claims 11 to 17 or the method of claim 3, wherein
one of network modes is a fast mode and said selected switching method is a method which performs switching to said mode in a fast manner using one or more of the following mechanisms:
a switching message received by said node is forwarded without delay;
a switching messages is forwarded using a fast route or a fast routing mechanism;
the propagation of the switching message is carried out independent of the actual switching.

20. The network node of one of claims 11 to 17 or the method of claim 4, wherein
one of network modes is a reliable mode and said selected switching method is a method which performs switching to said mode in a reliable manner by using one or more or the following mechanisms:
a switching message propagated by said node is forwarded using multiple and/or redundant routes;
the switching message is propagated in a repeated manner;
operating the old mode at least until the new mode starts to operate.

21. The network node of one of claims 11 to 19 or the method of one of claims 1 to 10, wherein a switching propagation method for propagating the switching through said network is carried out independent of the actual switching of a node.

## Amended claims

### Amended claims in accordance with Rule 86(2) EPC.

**1.** A method for operating a wireless network comprising a plurality of nodes, the network being operable in a plurality of network modes and being able to switch between different network modes, each network mode representing an operation scheme of the network in which a plurality of network parameters are chosen such that the network as a whole fulfils a desired operation characteristics corresponding to said network mode, wherein said plurality of network modes comprises a fast network mode in which said network operates in a fast manner and further an energy efficient mode in which said network operates in an energy efficient manner, wherein said network is capable of switching from the present network mode to a target network mode which fulfils a different desired operation characteristics by using one of a plurality of switching methods, each switching method having different switching characteristics, whereas said method comprises:
selecting the switching method for switching to said target mode such that the switching characteristics of the switching method is in accordance with the desired operation characteristics of the target network mode, and
switching from the present network mode to said target network mode using said selected switching method,
wherein one of said plurality of switching methods is an energy saving switching method which performs switching in an energy efficient manner compared to other switching methods, and
another one of said plurality of switching methods is a fast switching method which performs the switching in a fast manner compared to other switching methods, and wherein
if said target network mode is said energy efficient mode said energy efficient switching method is selected from said plurality of switching methods, and
if said target network mode is said fast mode said fast switching method is selected from said plurality of switching methods.

**2.** A method for operating a wireless network comprising a plurality of nodes, the network being operable in a plurality of network modes and being able to switch between different network modes each network mode representing an operation scheme of the network in which a plurality of network parameters are chosen such that the network as a whole fulfils a desired operation characteristics corresponding to said network mode wherein said plurality of network modes comprises a fast network mode in which said network operates in a fast manner and further a reliable mode in which said network operates in a reliable manner wherein said network is capable of switching from the present network mode to a target network mode which fulfils a different desired operation characteristics by using one of a plurality of switching methods each switching method having different switching characteristics, whereas said method comprises:
selecting the switching method for switching to said target mode such that the switching characteristics of the switching method is in accordance with the desired operation characteristics of the target network mode, and
switching from the present network mode to said target network mode using said selected switching method,
wherein one of said plurality of switching methods is a fast switching method which performs switching in a fast manner compared to other switching methods, and
another one of said plurality of switching methods is a reliable switching method which performs the switching in a reliable manner compared to other switching methods, and wherein
if said target network mode is said fast mode said fast switching method is selected from said plurality of switching methods, and
if said target network mode is said reliable mode said reliable switching method is selected from said plurality of switching methods

**3.** A method for operating a wireless network comprising a plurality of nodes, the network being operable in a plurality of network modes and being able to switch between different network modes each network mode representing an operation scheme of the network in which a plurality of network parameters are chosen such that the network as a whole fulfils a desired operation characteristics corresponding to said network mode, wherein said plurality of network modes comprises an energy savig network mode in which said network operates in an energy saving manner and further a reliable mode in which said network operates in a reliable manner, wherein said network is capable of switching from the present network mode to a target network mode which fulfils a different desired operation characteristics by using one of a plurality of switching methods, each switching method having different switching characteristics, whereas said method comprises:
selecting the switching method for switching to said target mode such that the switching characteristics of the switching method is in accordance with the desired operation characteristics of the target network mode, and
switching from the present network mode to said target network mode using said selected switching method,
wherein one of said plurality of switching methods is an energy saving switching method which performs switching in an energy efficient manner compared to other switching methods, and
another one of said plurality of switching methods is a reliable switching method which performs the switching in a reliable manner compared to other switching methods, and wherein
if said target network mode is said energy saving mode said energy saving switching method is selected from said plurality of switching methods, and
if said target network mode is said reliable mode said reliable switching method is selected from said plurality of switching methods

**4.** The method of one of the preceding claims, wherein said plurality of switching methods comprises:
a plurality of selectable switching propagation methods for propagating a switching signal through the nodes of said network.

**5.** The method of one of the preceding claims, wherein said plurality of switching methods comprises:
a plurality of selectable switching triggering methods for triggering the switching of a network mode from a present mode to a target mode.

**6.** The method of one of the preceding claims, wherein said plurality of switching methods comprises:
a plurality of selectable node role switching methods for switching the role of a node in the network from its present role to the role which is in accordance with the target network mode.

**7.** The method of one of the preceding claims, wherein
said selection of a switching method is further based on context information representing the status of the network or its nodes or the environment in addition to the characteristics of the target network mode.

**8.** The method of one of the preceding claims, wherein the selection of a network mode switching method comprises one or more of the following:
selecting a switching propagation method;
selecting a switching triggering method;
selecting a node role switching method.

**9.** The method of one of the preceding claims, wherein each network mode has assigned a set of parameters indicating for each node the role of the node in a certain network mode, and further indicating one or more of the following components of a network switching method:
a switching propagation method;
a switching triggering method;
a node role switching method.

**10.** A network node for operating a wireless network comprising a plurality of nodes, the network being operable in a plurality of network modes and the node being able to switch between different network modes, each network mode representing an operation scheme of the network in which a plurality of network parameters are chosen such that the network as a whole fulfils a desired operation characteristics corresponding to said network mode, wherein said plurality of network modes comprises a fast network mode in which said network operates in a fast manner and further an energy efficient mode in which said network operates in an energy efficient manner wherein said network node is capable of switching from the present network mode to a target network mode which fulfils a different desired operation characteristics by using one of a plurality of switching methods, each switching method having different switching characteristics, whereas said node comprises:
a selecting module for selecting the switching method for switching to said target mode such that the switching characteristics of the switching method is in accordance with the desired operation characteristics of the target network mode, and
a switching module for switching from the present network mode to said target network mode using said selected switching method,
wherein one of said plurality of switching methods is an energy saving switching method which performs switching in an energy efficient manner compared to other switching methods, and
another one of said plurality of switching methods is a fast switching method which performs the switching in a fast manner compared to other switching methods, and wherein
if said target network mode is said energy efficient mode said energy efficient switching method is selected by said selecting module from said plurality of switching methods, and
if said target network mode is said fast mode said fast switching method is selected by said selecting module from said plurality of switching methods.

**11.** A network node for operating a wireless network comprising a plurality of nodes, the network being operable in a plurality of network modes and the node being able to switch between different network modes each network mode representing an operation scheme of the network in which a plurality of network parameters are chosen such that the network as a whole fulfils a desired operation characteristics corresponding to said network mode wherein said plurality of network modes comprises a fast network mode in which said network operates in a fast manner and further a reliable mode in which said network operates in a reliable manner, wherein said network node is capable of switching from the present network mode to a target network mode which fulfils a different desired operation characteristics by using one of a plurality of switching methods each switching method having different switching characteristics whereas said node comprises:
a selecting module for selecting the switching method for switching to said target mode such that the switching characteristics of the switching method is in accordance with the desired operation characteristics of the target network mode, and
a switching module for switching from the present network mode to said target network mode using said selected switching method,
wherein one of said plurality of switching methods is a fast switching method which performs switching in an energy efficient manner compared to other switching methods, and
another one of said plurality of switching methods is a reliable switching method which performs the switching in a fast manner compared to other switching methods, and wherein
if said target network mode is said fast mode said fast switching method is selected by said selecting module from said plurality of switching methods, and if said target network mode is said reliable mode said reliable switching method is selected by said selecting module from said plurality of switching methods.

**12.** A network node for operating a wireless network comprising a plurality of nodes, the network being operable in a plurality of network modes and the node being able to switch between different network modes each network mode representing an operation scheme of the network in which a plurality of network parameters are chosen such that the network as a whole fulfils a desired operation characteristics corresponding to said network mode wherein said plurality of network modes comprises a reliable network mode in which said network operates in a reliable manner and further an energy saving mode in which said network operates in an energy saving manner wherein said network node is capable of switching from the present network mode to a target network mode which fulfils a different desired operation characteristics by using one of a plurality of switching methods each switching method having different switching characteristics, whereas said node comprises:
a selecting module for selecting the switching method for switching to said target mode such that the switching characteristics of the switching method is in accordance with the desired operation characteristics of the target network mode, and
a switching module for switching from the present network mode to said target network mode using said selected switching method,
wherein one of said plurality of switching methods is an energy saving switching method which performs switching in an energy efficient manner compared to other switching methods, and
another one of said plurality of switching methods is a reliable switching method which performs the switching in a fast manner compared to other switching methods, and wherein
if said target network mode is said energy saving mode said energy efficient switching method is selected by said selecting module from said plurality of switching methods, and
if said target network mode is said reliable mode said reliable switching method is selected by said selecting module from said plurality of switching methods.

**13.** The network node of claim 10, 11 or 12, further wherein said plurality of switching methods comprises:
a plurality of selectable switching propagation methods for propagating a switching signal through the nodes of said network, and/or
a plurality of selectable switching triggering methods for triggering the switching of a network mode from a present mode to a target mode; and/or
a plurality of selectable node role switching methods for switching the role of a node in the network from its present role to the role which is in accordance with the target network mode.

**14.** The network node of one of claims 10 to 13, wherein the selection of a network mode switching method comprises one of more of the following:
selecting a switching propagation method;
selecting a switching triggering method;
selecting a node role switching method.

**15.** The network node of one of claims 10 to 14, wherein
said selection of a switching method is further based on context information representing the status of the network or its nodes or the environment in addition to the characteristics of the target network mode.

**16.** The network node of one of claims 10 to 15, wherein each network mode has assigned a set of parameters indicating for each node the role of the node in a certain network mode, and further indicating one or more of the following:
a switching propagation method;
a switching triggering method
a node role switching method.

**17.** The network node of one of claims 10 to 16, wherein each network mode has assigned a set of parameters indicating for each node the role of the node in a certain network mode, and further indicating one or more of the following components of a network switching method:
a switching propagation method;
a switching triggering method;
a node role switching method.

**18.** The network node of one of claims 10 to 17, wherein said target network mode is an energy saving mode and said selected switching method is a method which performs switching to said mode in an energy efficient manner using one or more of the following mechanisms:
nodes execute said switching based on a time out.;
tearing down the operation of the old mode before starting the new mode;
using an efficient routing protocol such as multicast.

**19.** The network node of one of claims 10 to 17, wherein
one of network modes is a fast mode and said selected switching method is a method which performs switching to said mode in a fast manner using one or more of the following mechanisms:
a switching message received by said node is forwarded without delay;
a switching messages is forwarded using a fast route or a fast routing mechanism;
the propagation of the switching message is carried out independent of the actual switching.

**20.** The network node of one of claims 10 to 17, wherein
one of network modes is a reliable mode and said selected switching method is a method which performs switching to said mode in a reliable manner by using one or more or the following mechanisms:
a switching message propagated by said node is forwarded using multiple and/or redundant routes;
the switching message is propagated in a repeated manner;
operating the old mode at least until the new mode starts to operate.

**21.** The network node of one of claims 11 to 19 or the method of one of claims 1 to 10, wherein a switching propagation method for propagating the switching through said network is carried out independent of the actual switching of a node.
